# EUROPEAN PATENT APPLICATION

(11) **EP 4 722 398 A1**
(43) Date of publication of application: **08.04.2026**
(21) Application number: 23939895.1
(22) Date of filing: 11.12.2023
(51) Int. Cl.: C22B 26/12, C22B 3/42, C22B 3/38

(54) **METHOD FOR RECOVERING LITHIUM**

(30) Priority: 26.05.2023 KR 20230068686; 27.06.2023 KR 20230082829
(71) Applicant: Korea Zinc Co., Ltd., Seoul 03159 (KR); Kemco, Seoul 03159 (KR)
(72) Inventor: PARK, Ye Bin, Ulju-gun Ulsan 45003 (KR); CHOI, James Soung, Seongnam-si Gyeonggi-do 13480 (KR)
(74) Representative: Angerhausen, Christoph
(86) International application number: PCT/KR2023/020325
(87) International publication number: WO 2024/248256

(57) **Abstract**

A method for recovering lithium includes: preparing a lithium-containing solution containing lithium ions; exchanging the lithium ions with ions contained in a chelate resin so that the lithium ions are bonded to the chelate resin while the lithium-containing solution passes through the chelate resin; and allowing an acidic solution to pass through the chelate resin to which the lithium ions are bonded, so that the lithium ions are separated from the chelate resin.

## Description

### TECHNICAL FIELD

The present disclosure relates to a method for recovering lithium.

### BACKGROUND

Lithium (Li) is an essential industrial raw material used in various industries. Conventionally, lithium has been widely used in ceramics and chemical additives. In recent years, as major industries have changed to wireless and electric industries, lithium is being widely used in electronic devices such as mobile phones and laptops. In particular, as demand for lithium batteries used in electric vehicles (Battery Electric Vehicles or BEVs) increases, there is a need to develop a technique capable of effectively and economically extracting lithium from resources containing lithium.

Generally, lithium that exists in nature is distributed in extremely small amounts in soil, rocks, and natural water. Therefore, lithium needs to be recovered from soil, rocks, or natural water where lithium is concentrated, and the recovered lithium needs to be processed and used in a compound form. For example, commercial lithium is concentrated in minerals or brine.

Methods for recovering lithium from ore include a plurality of processes for a lithium-containing raw material, such as Spodumene, Lepidolite, Amblygonite or Petalite. In addition, the method for recovering lithium from ore includes a mining process, a shredding process, a separation process, and an ore dressing process, which are followed by a heating process, a concentration process, a filtration process, and an additive addition process for detailed processing. Since the method for recovering lithium from ore requires several processes, facility investments and operating costs increase, and a large amount of acidic sludge is generated, thereby causing serious environmental pollution.

Meanwhile, in order to solve problems arising in the method for recovering lithium from ore, there has been described a method for recovering lithium from brine existing in a salt lake. In a conventional method for recovering lithium from brine, brine is naturally evaporated to increase the concentration of lithium in the brine to produce a compound in the form of lithium carbonate (Li₂CO₃), and then lithium carbonate is precipitated. However, the process of naturally evaporating brine takes a long period of time, more than a year, and lithium is precipitated together with other substances during a concentration process.

Accordingly, there is a demand for a method for recovering lithium that can effectively recover lithium from a low-concentration lithium-containing solution in a short period of time.

### SUMMARY

Various embodiments of the present disclosure provide a technique capable of efficiently recovering lithium from a lithium-containing solution having a low lithium concentration.

Further, various embodiments of the present disclosure provide a technique capable of recovering lithium from a lithium-containing solution in a short period of time without naturally evaporating the lithium-containing solution for a long period of time.

In addition, various embodiments of the present disclosure provide a technique capable of minimizing the amount of sludge generated and preventing environmental pollution.

According to one embodiment of the present disclosure, there is provided a method for recovering lithium, comprising: preparing a lithium-containing solution containing lithium ions; exchanging the lithium ions with ions contained in a chelate resin so that the lithium ions are bonded to the chelate resin while the lithium-containing solution passes through the chelate resin; and allowing an acidic solution to pass through the chelate resin to which the lithium ions are bonded, so that the lithium ions are separated from the chelate resin.

In one embodiment, the method may further include: mixing a basic solution with the lithium-containing solution to adjust a pH of the lithium-containing solution, wherein the lithium-containing solution may be allowed to pass through the chelate resin in a state in which the pH of the lithium-containing solution is adjusted to a range of 10 to 13 by the basic solution.

In one embodiment, the lithium-containing solution may be provided so that the ratio of the amount of the lithium-containing solution passing through the chelate resin to the amount of the chelate resin is 4.17 to 8.33.

In one embodiment, the ratio of the amount of the lithium ions bonded to the chelate resin to the amount of the chelate resin may be 1 to 1.3.

In one embodiment, the acidic solution may be provided so that the ratio of the amount of the acidic solution passing through the chelate resin to the amount of the chelate resin is 1.5 to 2.5.

In one embodiment, the method may further include: allowing water to pass through the chelate resin to which the lithium ions are bonded, so that the lithium ions are separated from the chelate resin, wherein the process of allowing the water to pass through the chelate resin may be performed after the process of allowing the acidic solution to pass through the chelate resin.

In one embodiment, the method may further include: providing a phosphorus supply material containing one or more of phosphorus, phosphoric acid and phosphate to a purified lithium solution containing lithium ions separated from the chelate resin, wherein the lithium ion concentration in the lithium-containing solution may be 0.39 g/L or less.

In one embodiment, the lithium-containing solution may include seawater or brine having a sodium (Na) concentration of 30 g/L to 50 g/L.

In one embodiment, the ions contained in the chelate resin and exchanged with the lithium ion may be hydrogen ions.

In one embodiment, an acid concentration in the acidic solution may be 1.472 eq/L to 2.208 eq/L.

According to the present disclosure in some embodiments, it is possible to efficiently recover lithium from a lithium-containing solution having a low lithium concentration.

Further, it is possible to recover lithium from a lithium-containing solution in a short period of time without naturally evaporating the lithium-containing solution for a long period of time.

In addition, it is possible to minimize the amount of sludge generated and preventing environmental pollution.

### BRIEF DESCRIPTION OF DRAWINGS

FIG. 1 is a flowchart showing a method for recovering lithium according to an embodiment of the present disclosure.
FIG. 2 is a graph showing the lithium bonding capability depending on pH.
FIG. 3 is a graph showing the lithium bonding capability depending on the ratio of a sample amount to a chelate resin amount.
FIG. 4 is a graph showing a hydrogen ion exchange rate depending on the ratio of acidic solution to a chelate resin amount.

### DETAILED DESCRIPTION

Embodiments of the present disclosure are illustrated for describing the technical spirit of the present disclosure. The scope of the claims according to the present disclosure is not limited to the embodiments described below or to the detailed descriptions of these embodiments
Hereinafter, the present disclosure will be described with reference to the drawings.

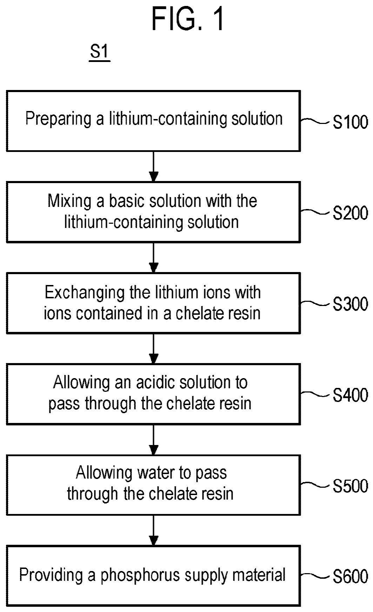

FIG. 1 is a flowchart showing a method for recovering lithium according to an embodiment of the present disclosure.

Referring to FIG. 1, in a method for recovering lithium (S1), lithium is recovered from a lithium-containing solution. For example, in the method for recovering lithium (S1), lithium may be recovered from seawater or brine in the form of lithium phosphate (Li₃PO₄).

The method for recovering lithium (S1) may include a step (S100) of preparing a lithium-containing solution containing lithium ions. In this specification, the lithium-containing solution contains lithium ions. For example, the concentration of lithium ions in the lithium-containing solution may be 0.39 g/L or less. Further, the lithium-containing solution may be seawater or brine having a sodium (Na) concentration of 30 g/L to 50 g/L. In the step (S100) of preparing the lithium-containing solution, the lithium-containing solution may be provided so that the ratio of the amount of the lithium-containing solution passing through the chelate resin to the amount of the chelate resin is 4.17 to 8.33. That is, the amount of the lithium-containing solution provided in the step (S100) of preparing the lithium-containing solution may be 4.17 to 8.33 times the amount of chelate resin by volume ratio.

The method for recovering lithium (S1) may include a step (S200) of mixing a basic solution with the lithium-containing solution to adjust the pH of the lithium-containing solution. In the step (S200) of mixing the basic solution with the lithium-containing solution, the basic solution is mixed with the lithium-containing solution so that the pH of the lithium-containing solution is adjusted to a range of 10 to 13. For example, the basic solution may be sodium hydroxide (NaOH). Further, the step (S200) of mixing the basic solution with the lithium-containing solution may be performed before the basic solution passes through the chelate resin. In this case, the lithium-containing solution passes through the chelate resin in a state in which the pH of the lithium-containing solution is adjusted to a range of 10 to 13 by the basic solution. As an example, the chelate resin used herein may be an ion exchange resin polymerized by adding DVB (divinylbenzene) to polystyrene.

The method for recovering lithium (S1) may include a step (S300) of exchanging ions contained in the chelate resin and lithium ions so that the lithium ions are bonded to the chelate resin while the lithium-containing solution passes through the chelate resin. In the step (S300) of exchanging ions contained in the chelate resin and lithium ions, the lithium-containing solution whose pH is adjusted in the step (S200) of mixing the basic solution with the lithium-containing solution passes through the chelate resin. While the lithium-containing solution passes through the chelate resin, lithium ions contained in the lithium-containing solution are exchanged with ions contained in the chelate resin. In other words, the lithium ions contained in the lithium-containing solution are bonded to the chelate resin, and the ions bonded to the chelate resin are separated from the chelate resin. In this case, the lithium ions contained in the lithium-containing solution are separated from the lithium-containing solution while being bonded to the chelate resin. For example, according to one embodiment of the present disclosure, the chelate resin may contain hydrogen ions, and the hydrogen ions may be exchanged with lithium ions in the lithium-containing solution.

The method for recovering lithium (S1) may include a step (S400) of allowing an acidic solution to pass through the chelate resin to which lithium ions are bonded, so that the lithium ions are separated from the chelate resin. In the step (S400) of allowing the acidic solution to pass through the chelate resin, the acidic solution is allowed to pass through the chelate resin to which lithium ions are bonded, and the lithium ions are separated from the chelate resin while the acidic solution passes through the chelate resin. The acid concentration in the acidic solution is 1.472 eq/L to 2.208 eq/L. For example, the acidic solution may be sulfuric acid (H₂SO₄) having a concentration of 72 g/L or more and 108 g/L or less. Further, in the step (S400) of allowing the acidic solution to pass through the chelate resin, the acidic solution may be provided so that the ratio of the amount of the acidic solution passing through the chelate resin to the amount of the chelate resin is 1.5 to 2.5. That is, the amount of the acidic solution provided in the step (S400) of allowing the acidic solution to pass through the chelate resin may be 1.5 to 2.5 times the amount of the chelate resin by volume ratio.

The method for recovering lithium (S1) may include a step (S500) of allowing water to pass through the chelate resin to which lithium ions are bonded, so that the lithium ions are separated from the chelate resin. In the step (S500) of allowing water to pass through the chelate resin, water is allowed to pass through the chelate resin to which lithium ions are bonded, and the lithium ions are separated from the chelate resin while the water passes through the chelate resin. The step (S500) of allowing water to pass through the chelate resin may be performed after the step (S400) of allowing an acidic solution to pass through the chelate resin. In this case, as the acidic solution passes through the chelate resin, lithium ions are primarily separated from the chelate resin (S400), and as water passes through the chelate resin, lithium ions are secondarily separated from the chelate resin (S500). In the step (S500) of allowing water to pass through the chelate resin, water may be provided so that the ratio of the amount of water passing through the chelate resin to the amount of chelate resin is 1.5 to 2.5. That is, the amount of water provided in the step (S500) of allowing water to pass through the chelate resin may be 1.5 to 2.5 times the amount of chelate resin by volume ratio.

The method for recovering lithium (S1) may include a step (S600) of providing a phosphorus supply material containing one or more of phosphorus, phosphoric acid and phosphate to a purified lithium solution. In this regard, the purified lithium solution is a solution containing the lithium ions separated from the chelate resin. In the step (S600) of providing a phosphorus supply material, the phosphorus supply material may react with the lithium ions to produce lithium phosphate (Li₃PO₄). In this regard, the phosphorus supply material includes one or more of phosphorus, phosphoric acid and phosphate, and the phosphate may be one or more of potassium phosphate, sodium phosphate and ammonium phosphate.

In this way, the method for recovering lithium (S1) can recover lithium ions in the form of lithium phosphate from seawater or brine containing lithium ions having a low concentration of 0.39 g/L or less.

Hereinafter, examples of the method for recovering lithium of the present disclosure will be described.

### Analysis results based on pH

**[Table 1]**

| | | | Example 1 | Example 2 | Example 3 | Example 4 | Example 5 | Example 6 | Example 7 |
|---|---|---|---|---|---|---|---|---|---|
| pH | | | pH 2 | pH 6 | pH 9 | pH 10 | pH 11.5 | pH 13 | pH 14 |
| Sample amount (mL) | | | 1,000 | 1,000 | 1,000 | 1,000 | 1,000 | 1,000 | 1,000 |
| Chelate resin amount (mL) | | | 180 | 180 | 180 | 180 | 180 | 180 | 180 |
| Before reaction | Li | mg/L | 250 | 250 | 250 | 250 | 250 | 250 | 250 |
| | Na | g/L | 40.3 | 40.3 | 40.3 | 40.3 | 40.3 | 40.3 | 40.3 |
| After reaction | Li | mg/L | 113 | 97.0 | 82.7 | 46.4 | 16.8 | 58.7 | 78.3 |
| | Na | g/L | 22.4 | 30.5 | 32.1 | 34.8 | 33.6 | 34.2 | 38.2 |
| Lithium recovery rate (%) | | | 54.8 | 61.2 | 66.9 | 81.4 | 93.3 | 76.5 | 68.7 |
| Lithium bonding capability | | | 0.76 | 0.85 | 0.93 | 1.13 | 1.30 | 1.06 | 0.95 |

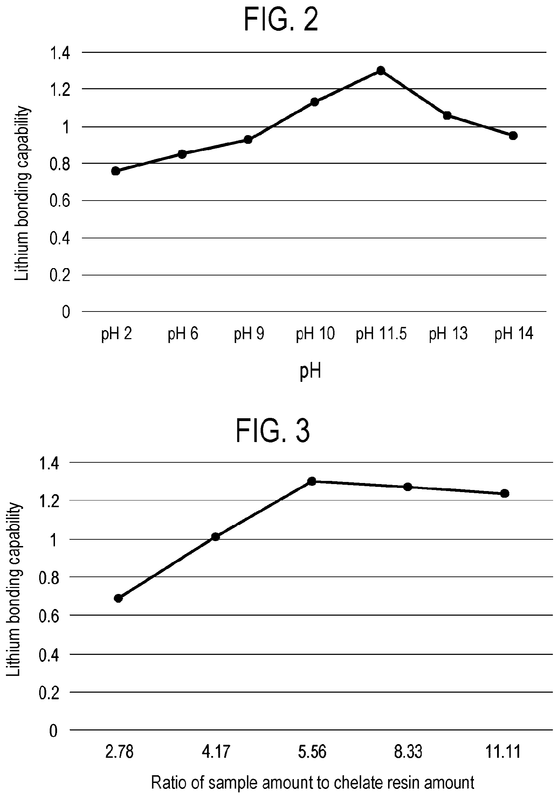

In Table 1 above, Examples 1 to 7 are experiments performed under the same experimental conditions while changing only the pH of the lithium-containing solution. In this regard, pH adjustment is performed in the step (S200) of mixing the basic solution with the lithium-containing solution. As used herein, the lithium recovery rate (%) refers to the percentage of the amount of lithium bonded to the chelate resin relative to the amount of lithium contained in the lithium-containing solution before reaction. In addition, the lithium bonding capability refers to the amount of lithium bonded to the chelate resin relative to the amount of chelate resin, and means the degree to which lithium is recovered in the chelate resin. In other words, if the absolute amount (mg) of lithium in the treated sample is assumed to be the same, the higher the lithium bonding capability, the more lithium is recovered in the same chelate resin. As shown in Table 1 and FIG. 2, it can be seen that the lithium recovery rate and lithium bonding capability are changed as the pH is changed. It can be seen that the lithium-containing solutions having pH adjusted to a range of 10 to 13 (Examples 4 to 6) are more preferable in terms of the lithium recovery rate and the lithium bonding capability.

### Analysis results based on the ratio of sample amount to chelate resin amount

**[Table 2]**

| | | | Example 8 | Example 9 | Example 10 | Example 11 | Example 12 |
|---|---|---|---|---|---|---|---|
| Sample amount (mL) | | | 500 | 750 | 1,000 | 1,500 | 2,000 |
| Chelate resin amount (mL) | | | 180 | 180 | 180 | 180 | 180 |
| Before reaction | pH | | 11.5 | 11.5 | 11.5 | 11.5 | 11.5 |
| | Li | mg/L | 250 | 250 | 250 | 250 | 250 |
| After reaction | Li | mg/L | 0.11 | 8.50 | 16.80 | 97.20 | 138.70 |
| Ratio of sample amount to chelate resin amount | | | 2.78 | 4.17 | 5.56 | 8.33 | 11.11 |
| Lithium bonding capability | | | 0.69 | 1.01 | 1.30 | 1.27 | 1.24 |

In Table 2 above, Examples 8 to 12 are experiments performed under the same experimental conditions while changing the sample amount. As used herein, the sample amount refers to the amount of lithium-containing solution passing through the chelate resin. In this regard, Table 2 shows experiments performed while changing the ratio of the amount of lithium-containing solution passing through the chelate resin to the amount of chelate resin. As shown in Table 2 and FIG. 3, it can be seen that the lithium bonding capability is changed as the sample amount relative to the amount of chelate resin is changed. Furthermore, it can be seen that the lithium bonding capability is further improved when the ratio of the sample amount to the chelate resin amount is 4.17 to 8.33 (Examples 9 to 11). If the ratio of the sample amount to the chelate resin amount is 4.17 or more as in Example 9, the lithium bonding capability has a significant value of 1 or more. If the ratio of the sample amount to the chelate resin amount is 8.33 or less as in Example 11, the lithium bonding capability can be maintained at a predetermined level, and the amount of sample added can be prevented from being excessively large.

### Analysis results based on the ratio of acidic solution amount to chelate resin amount

**[Table 3]**

| | | Example 13 | Example 14 | Example 15 | Example 16 | Example 17 |
|---|---|---|---|---|---|---|
| Chelate resin amount (mL) | | 180 | | | | |
| Total amount of bonded Li (mg) | | 233 | | | | |
| Acid concentration of acidic solution used (eq/L as acid) | | 1.84 | | | | |
| Solution amount | mL | 90 | 180 | 270 | 360 | 450 |
| Li | mg/L | 3.8 | 6.3 | 613 | 572 | 465 |
| Ratio of solution amount to resin amount | | 0.5 | 1 | 1.5 | 2 | 2.5 |
| Amount of acid consumed (eq as acid) | | 0.166 | 0.331 | 0.497 | 0.662 | 0.828 |
| Total amount of Li extracted after hydrogen ion exchange (mg) | | 0.34 | 1.13 | 165.51 | 205.92 | 209.25 |
| Hydrogen ion exchange rate (%) | | 0.15 | 0.49 | 71.03 | 88.38 | 89.81 |

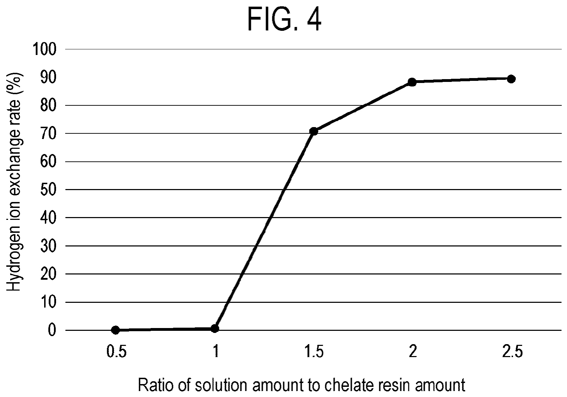

In Table 3 above, Examples 13 to 17 are experiments performed under the same experimental conditions while changing the solution amount. As used herein, the solution amount refers to the amount of acidic solution passing through the chelate resin. In this regard, Table 3 above shows experiments performed while changing the ratio of the amount of acid solution passing through the chelate resin to the amount of chelate resin. As shown in Table 3 and FIG. 4 above, it can be seen that the hydrogen ion exchange rate is changed as the amount of acidic solution consumed is changed. It can be noted that the hydrogen ion exchange rate is further improved when the ratio of the solution amount to the amount of chelate resin is 1.5 to 2.5 by volume ratio (Examples 15 to 17). If the ratio of the solution amount to the amount of chelate resin is 1.5 or more by volume ratio as in Example 15, the hydrogen ion exchange rate is significantly increased, and the amount of recovered lithium is increased. In addition, if the ratio of the solution amount to the amount of chelate resin is 2.5 or less by volume ratio as in Example 17, it is possible to prevent the amount of the acidic solution added from being excessively large. Although the embodiments of the present disclosure have been described with reference to the accompanying drawings, those skilled in the art to which the present disclosure pertains will be able to understand that the embodiments can be implemented in other specific forms without changing the technical spirit or essential features of the present disclosure.

Therefore, it should be understood that the embodiments described above are exemplary and not limitative in all respects. The scope of the present disclosure is defined by the claims rather than the detailed description. It should be construed that all changes or modified forms derived from the meaning and scope of the claims and equivalent concepts thereof are included in the scope of the present disclosure.

## Claims

1. A method for recovering lithium, comprising:
preparing a lithium-containing solution containing lithium ions;
exchanging the lithium ions with ions contained in a chelate resin so that the lithium ions are bonded to the chelate resin while the lithium-containing solution passes through the chelate resin; and
allowing an acidic solution to pass through the chelate resin to which the lithium ions are bonded, so that the lithium ions are separated from the chelate resin.

2. The method of Claim 1, further comprising:
mixing a basic solution with the lithium-containing solution to adjust a pH of the lithium-containing solution,
wherein the lithium-containing solution is allowed to pass through the chelate resin in a state in which the pH of the lithium-containing solution is adjusted to a range of 10 to 13 by the basic solution.

3. The method of Claim 1, wherein the lithium-containing solution is provided so that the ratio of the amount of the lithium-containing solution passing through the chelate resin to the amount of the chelate resin is 4.17 to 8.33.

4. The method of Claim 2 or 3, wherein the ratio of the amount of the lithium ions bonded to the chelate resin to the amount of the chelate resin is 1 to 1.3.

5. The method of Claim 3, wherein the acidic solution is provided so that the ratio of the amount of the acidic solution passing through the chelate resin to the amount of the chelate resin is 1.5 to 2.5.

6. The method of Claim 1, further comprising:
allowing water to pass through the chelate resin to which the lithium ions are bonded, so that the lithium ions are separated from the chelate resin,
wherein the process of allowing the water to pass through the chelate resin is performed after the process of allowing the acidic solution to pass through the chelate resin.

7. The method of Claim 1, further comprising:
providing a phosphorus supply material containing one or more of phosphorus, phosphoric acid and phosphate to a purified lithium solution containing lithium ions separated from the chelate resin,
wherein the lithium ion concentration in the lithium-containing solution is 0.39 g/L or less.

8. The method of Claim 7, wherein the lithium-containing solution includes seawater or brine having a sodium (Na) concentration of 30 g/L to 50 g/L.

9. The method of Claim 1, wherein the ions contained in the chelate resin and exchanged with the lithium ion are hydrogen ions.

10. The method of Claim 1, wherein an acid concentration in the acidic solution is 1.472 eq/L to 2.208 eq/L.
